Europäisches Patentamt

European Patent Office

Office européen des brevets

(19)

(11) Numéro de publication: **0 165 190 B1**

(12) **FASCICULE DE BREVET EUROPEEN**

(45) Date de publication du fascicule du brevet:
28.12.88

(51) Int. Cl.⁴: **A 47 B 91/02**

(21) Numéro de dépôt: 85440029.8

(22) Date de dépôt: 17.05.85

(54) **Dispositif de support extensible.**

(30) Priorité: 18.05.84 FR 8407717
06.03.85 FR 8503268

(43) Date de publication de la demande:
18.12.85 Bulletin 85/51

(45) Mention de la délivrance du brevet:
28.12.88 Bulletin 88/52

(84) Etats contractants désignés:
BE CH DE FR GB IT LI

(56) Documents cités:
CH-A- 304 668

(73) Titulaire: **Rothschild, Philippe, 20 avenue du Docteur Calmette, F-92140 Clamart (FR)**

(72) Inventeur: **Rothschild, Philippe, 20 avenue du Docteur Calmette, F-92140 Clamart (FR)**

(74) Mandataire: **Joly, Jean-Jacques et al, CABINET BEAU DE LOMENIE 55, rue d'Amsterdam, F-75008 Paris (FR)**

## Description

La présente invention a pour objet un dispositif de support extensible, à deux ou plusieurs paliers, dont l'allongement et le raccourcissement résultent du soulèvement et de l'abaissement de l'équipement supporté.

On connaît déjà des dispositifs déstinés à assurer le confort des jambes et ainsi à prévenir la formation de varices, à permettre la surélévation ou l'abaissement temporaire d'un lit/sommier pour en faciliter l'emploi aux personnes agées ou handicapées. De tels dispositifs sont conçus pour remplacer les cales artisanales de toutes formes et dimensions, peu pratiques, souvent coûteuses voire dangereuses, toujours inesthétiques.

On remarque que les dispositifs selon l'art antérieur sont soit de type télescopique soit à cale basculante.

Les dispositifs télescopiques de l'art antérieur ont l'inconvénient d'une faible résistance à la pression en position allongée. Cela est dû à la seule utilisation d'une vis de serrage (CH-A-277 595) ou au maintien dans cette position par une prise d'appui de l'élément télescopique supérieur sur un ergot monté sur cet élément de façon déplaçable perpendiculairement et latéralement à l'axe de l'élément télescopique inférieur (Demande de brevet FR No 79 14513), ou sur une tête de vis perpendiculaire à l'axe de l'élément télescopique inférieur et maintenu sur cet élément par serrage d'un collier métallique (brevet No CH-A-304 668), une goupille étant prévue dans ce cas pour garantir la fiabilité de la prise d'appui.

Le dispositif à cale basculante de l'art antérieur pallie cet inconvénient mais il manque de rigidité et de résistance à la flexion (US-A-2 149 195).

Quelqu'en soit le type, les dispositifs de l'art antérieur présentent aussi l'inconvénient d'une double voire triple manipulation pour obtenir l'allongement et/ou le raccourcissement du support; d'une part l'action de soulever/abaisser l'équipement lui-même, d'autre part soit l'actionnement d'un levier de commande d'un ergot (US-A-1 370 732), soit la traction exercée sur un galet chargé par un ressort (Demande de brevet FR No 79 14513), soit une traction suivie d'une rotation (ou inversement d'une rotation suivie d'une rétractation) exercée sur l'élément télescopique inférieur lui-même, pour assurer à la fois l'allongement et la recherche de positions appropriées de prise d'appui d'un doigt dans les crans superposés d'une entaille verticale de l'élément télescopique supérieur (FR-A-2 208 288), soit l'enlèvement d'une goupille suivi du décoincement d'une tête de vis enserrée dans une ferrure de maintien vertical et latéral plaquée contre l'ouverture de l'élément femelle (CH-A-304 668).

Le dispositif à cale basculante pallie cet inconvénient lors de l'allongement du support mais sa rétractation ne peut s'obtenir qu'en positionnant à la main sa partie mobile.

Le dispositif selon l'invention consiste en un support extensible à au moins deux paliers formé de deux éléments télescopiques dont la position relative est commandée par un système de cames solidaire en rotation de l'un des éléments coopérant avec un doigt solidaire de l'autre élément, la came constituant un circuit fermé et définissant des paliers d'appui à un niveau bas et au moins un niveau haut caractérisé par des moyens de maintien au niveau d'au moins un palier haut défini par le système came-doigt, constitués par au moins une butée formée d'un décrochement à la périphérie haute de l'élément mâle télescopique et d'une partie en saillie sur l'élément télescopique femelle.

L'allongement et le raccourcissement du support extensible, résultent du simple soulèvement et abaissement de l'equipement soutenu, l'allongement étant maintenu aux divers niveaux hauts par une prise d'appui verticale d'au moins une butée.

Le support selon l'invention évite des doubles manipulations à la fois lors de l'allongement et lors de la rétraction. Il permet à la fois l'allongement automatique et la prise d'appui verticale. Sa fiabilité résulte du faible nombre de pièces en mouvement. Il peut être fabriqué en des matériaux divers dont le bois, avec des pièces de quincaillerie courante.

Un mode de réalisation d'un dispositif selon l'invention est décrit ci-après à titre indicatif mais non limitatif en référence aux dessins annexés sur lesquels:

les figures 1a, 1b et 1c sont des vues en coupe selon le plan I-I de la figure 2, d'un support extensible selon l'invention réalisé en bois, respectivement en appui au niveau bas (1er palier), au premier niveau haut (2ème palier) et au deuxième niveau haut (3ème palier) avec une butée en escalier;

la figure 2 est une vue en perspective, à l'intérieur de l'élément télescopique supérieur femelle, en transparence, du support extensible des figures 1a à 1c;

les figures 3a, 3b et 3c sont des vues en coupe horizontale selon le plan III-III de la figure 2, de l'élément télescopique inférieur mâle pour une butée en escalier et selon les deux paliers au niveau haut (fig. 3a et 3b), et pour des butées cylindriques indépendantes, à raison d'une butée par niveau (fig. 3c); et

la figure 4 représente, en développement plan, le cylindre décrit par la périphérie de l'élément mâle du support extensible de la figure 2, le système de cames prévu à sa surface, ainsi que les étapes de la course du doigt coopérant avec le système de cames.

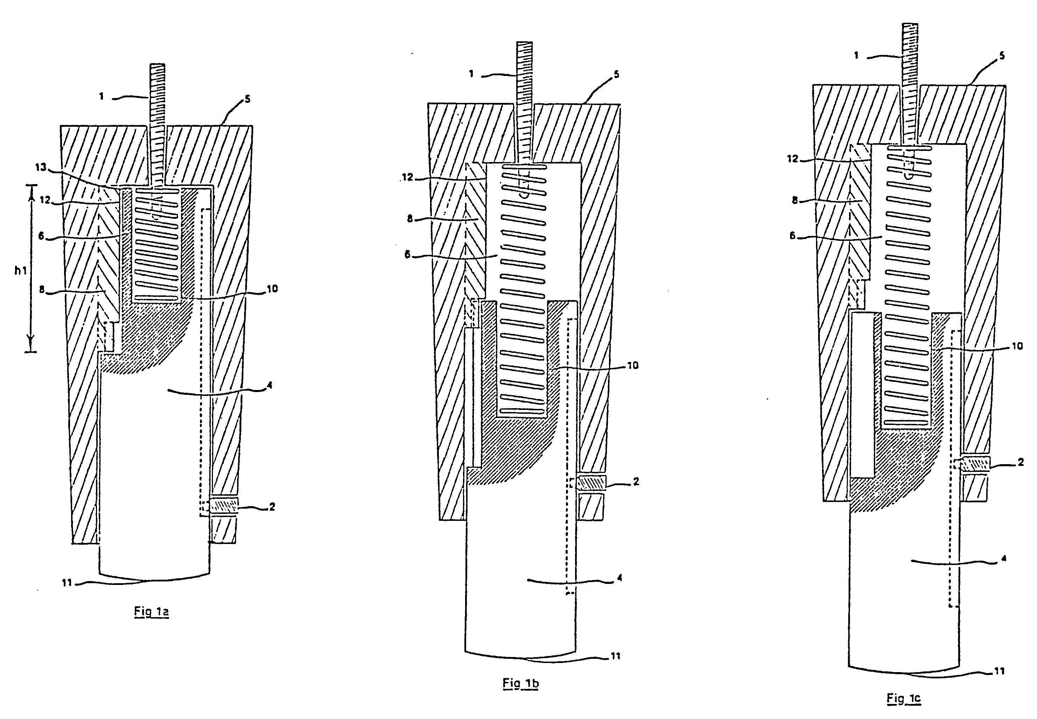

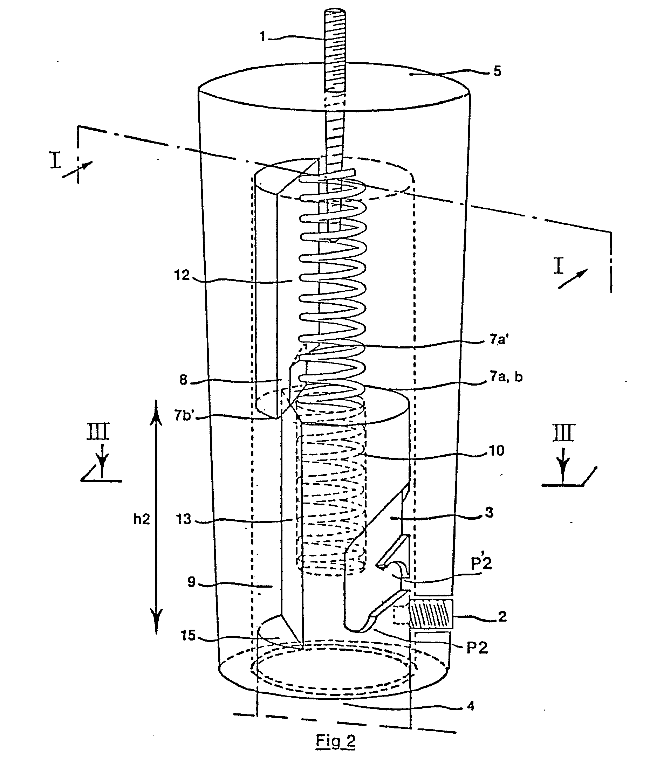

Le support extensible, illustré par les figures 1a, 1b, 1c et 2 comprend deux éléments télescopiques, l'un mâle, l'autre femelle, tels que l'élément mâle 4 comporte une surface cylindrique extérieure et l'élément femelle 5 une surface cylindrique circulaire intérieure, ces deux surfaces coopérant. La position relative de ces deux éléments est commandée par un système de cames en rotation 3, solidaire de l'un des éléments, avec doigt coopérant 2 solidaire de l'autre élément, la came constituant un circuit fermé et définissant des paliers d'appui à des niveaux différents, décalés latéralement ou latéralement et verticalement, selon le système de prise d'appui.

Dans le mode de réalisation illustré la came est ménagée sur la périphérie de l'élément mâle et le doigt coopérant est aménagé sur la partie cylindrique intérieure de l'élément femelle assurant ainsi la rotation de l'élément mâle et permettant ainsi la recherche de positions de prise d'appui dont le niveau est fonction de l'élévation de l'équipement.

Le tracé de la came comporte au moins quatre tronçons successifs (fig. 4). Un premier tronçon (A) est dirigé vers le haut, permettant dans l'une des variantes, le désemboîtement et — en fin de cycle allongement/raccourcissement — le réemboîtement des parties en périphérie de l'élément mâle et des parties en saillies sur l'élément femelle. Un deuxième tronçon (B) prolongeant le premier tronçon vers le haut, est incliné et comporte une arête supérieure dont l'extrémité inférieure empêche le doigt coopérant de s'engager dans un quatrième tronçon destiné au trajet de retour, et au moins un évidement sur son arête inférieure permettant de recevoir et d'immobiliser le doigt coopérant à un niveau défini. L'arête supérieure du deuxième tronçon (B) comporte au moins un évidement P'i assurant le blocage du doigt 2 coopérant avant le franchissement d'au moins un palier Pi de prise d'appui. Chaque évidement P'i dans l'arête supérieure du deuxième tronçon constitue une surface conjuguée du doigt coopérant 2 et prend la forme d'un cylindre ouvert dont l'axe xx' est situé entre les points d'inflexion antérieurs Ii de l'arête inférieure déterminée par les évidements correspondant au(x) palier(s) de prise d'appui et l'axe Xi de ces évidements Pi, également en forme d'un cylindre ouvert. Un troisième tronçon (C), dirigé vers le haut, est incliné latéralement en sens opposé au deuxième tronçon, permettant au doigt d'atteindre le sommet de sa course. Selon une variante, ce troisième tronçon coudé, dit de dégagement, peut également comporter des évidements de blocage et de prise d'appui respectivement sur son arête supérieure et inférieure. Selon une autre variante, le deuxième tronçon (B) est en zig-zag et est suivi d'un tronçon de dégagement de sens opposé à la première partie du deuxième tronçon. Le quatrième tronçon (D) est dirigé vers le bas et comporte au moins un coude; il rejoint l'arête supérieure du deuxième tronçon à un point d'intersection décrit précédemment, décalé dans le sens opposé audit tronçon, par rapport au premier tronçon.

Le support selon l'invention peut, en pratique, être caractérisé par la présence de moyens de maintien au niveau des différents paliers définis par le système came-doigt, constitués par une ou plusieurs butées formées de décrochements 9 à la périphérie de l'élément mâle et de parties en saillies 8 sur l'élément femelle.

Le système de prise d'appui peut comporter plus d'une butée, à raison d'une butée par palier ou de plus d'une butée par palier, par exemple disposés à 180° l'une de l'autre pour un même niveau. Dans le cas d'un dispositif à plus de deux paliers la ou les butées peuvent se présenter en escalier, chaque marche 14 constituant une butée de hauteur différente.

La forme des butées peut être définie, à titre d'exemple par l'intersection des deux portions de cylindre comprise entre la périphérie et la ou les parois verticales 12, 13 des parties en saillie et en décrochement respectivement de l'élément femelle et de l'élément mâle.

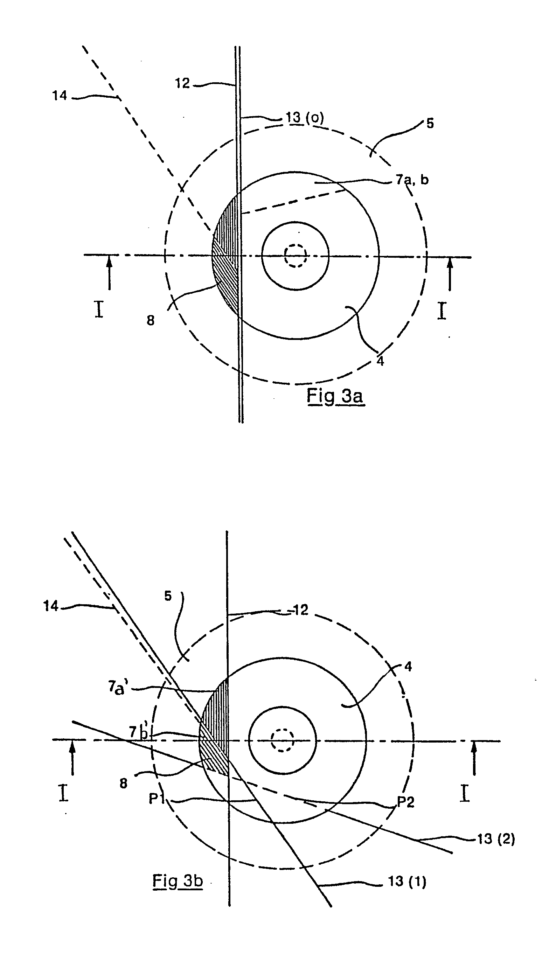

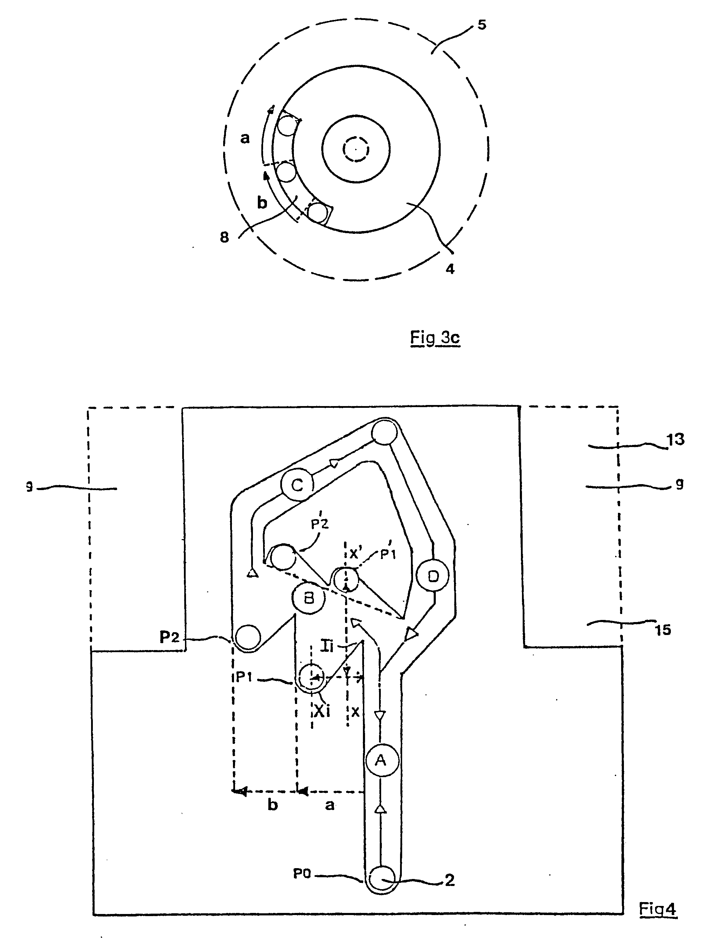

La hauteur h2 et la base 15 du ou des décrochements à la périphérie de la partie mâle sont soit égales soit supérieures respectivement à la hauteur h1 et aux surfaces à la base de l'élément en saillie sur la partie femelle. La hauteur h1 de chaque butée ou le niveau atteint pour chaque marche d'une butée en escalier sont légèrement supérieurs aux allongements définis par le tracé du système de cames aux niveaux atteints par le doigt coopérant aux points de contacts de ce doigt et des évidements correspondants à chaque palier par rapport au niveau du palier correspondant à la position ramassée du dispositif. Pour des systèmes de butées comportant au moins une butée par niveau, à titre d'exemple de forme cylindrique, la base 15 des décrochements a une surface qui est fonction des arcs a, b,...n (fig. 3c et 4) décrits par les butées 2ème à nème, avant que leur désemboîtement par rapport au(x) décrochement(s) sur la partie haute de la partie mâle, soit complet. Ce ou ces arcs sont eux-mêmes proportionnels à celui ou ceux séparant deux évidements de prise d'appui successifs Pi sur le tronçon B du système de cames. Pour des décrochements contigus, la base 15 peut, à titre d'exemple, sur la périphérie du haut de la partie mâle, prendre la forme d'un escalier aux marches d'une profondeur proportionelle aux arcs ainsi décrits par chaque butée.

Pour une butée en escalier la forme des surfaces de contact 7a, b et 7a', b' est définie par l'intersection de la surface horizontale supérieure de l'élément mâle par une ou des surfaces verticales, planes ou non, et en fonction du positionnement du doigt dans l'un des évidements de la came.

Pour faciliter le pivotement de l'élément mâle dans l'élément femelle, le dispositif selon l'invention peut être équipé d'un ressort en compression 6 interposé entre le fond de l'élément femelle et un logement cylindrique 10 ménagé dans le haut de l'élément mâle. Ce ressort est maintenu en position verticale à sa partie supérieure, par exemple, par la tige filetée 1 de fixation du support. Le pivotement de l'élément mâle est aussi facilité par la forme sphérique de son extrémité inférieure 11, et par les valeurs d'angle du système de came.

Le mode de fonctionnement du dispositif selon l'invention est principalement caractérisé par les phases successives du cycle allongement/compression.

En référence à la figure 4, la phase (A) correspond au désemboîtement de l'élément télescopique inférieur mâle 4 par rapport au(x) système(s) de butée(s) formée(s) sur l'élément femelle 5 des parties en saillie intérieures définies par les surfaces 7a', 7b', 8 et 12 et sur l'élément mâle 4 par l'évidement 9 délimité par les surfaces 13 et 15, et par rapport au palier P0, précédant la prise d'appui sur le fond plan intérieur de l'élément télescopique supérieur femelle 5.

Pour une butée de la forme représentée en figure 2, la course du doigt 2 pour la phase (A) est verticale.

La phase (B) correspond à la recherche du palier permettant l'allongement souhaité. En soulevant progressivement l'équipement, on provoque, à partir d'un certain allongement du support, la rotation de l'élément télescopique inférieur mâle 4. Lorsque l'angle de cette rotation est tel que le doigt 2 se trouve à la verticale des points P1 ou P2, l'équipement pourra reprendre appui sur le support qui aura ainsi subi un allongement respectivement égal à P1-P0 ou P2-P0.

Lorsque le doigt 2 est en P0 comme représenté en figure 3a, les surfaces de prise d'appui sont d'une part la partie haute 7 de l'élément télescopique inférieur mâle 4, et, éventuellement partie ou la totalité de la partie basse 15 du décrochement 9, d'autre part le fond plan intérieur de l'élément télescopique supérieur femelle 5 ainsi que le deuxième palier 7b' de la butée en escalier 8, laquelle est scellée au fond de l'élément télescopique supérieur femelle 5 ou fait partie de cet élément.

Selon l'arc de rotation de l'élément télescopique inférieur mâle 4, le doigt 2 atteindra P1 ou P2 et les surfaces de prise d'appui sont, d'une part l'aire 7a ou 7b, d'autre part, les marches correspondantes 7a' et 7b' de la butée en escalier 8.

La phase (C) correspond à un dégagement qui permet le retour éventuel du doigt 2 au point de prise d'appui le plus élevé P2 de la phase (B) avant qu'il n'ait atteint le point culminant de sa course par l'effet conjugué du poids de l'équipement et de la poussée contraire exercée par l'arête inférieure de la came précédant ce point culminant.

Lorsque les tronçons (B) et/ou (C) comportent au moins un évidement de blocage, une étape supplémentaire intervient avant la prise d'appui, celle de la libération du doigt 2 bloqué au point d'arrêt correspondant P'i...P'n). Cette libération s'obtient par l'abaissement de l'équipement à soulever, la rotation de l'élément télescopique inférieur mâle 4 se poursuivant alors grâce à l'appui exercé par le doigt 2 sur l'arête inférieure du tronçon (B) ou (C), jusqu'à ce que la prise d'appui soit effective au palier (Pi...Pn) correspondant.

Le tracé correspondant à la phase (D) assure le retour de l'élément télescopique inférieur mâle 4 en une position, atteinte au point de jonction avec le tronçon de la phase (A), permettant l'emboîtement avec la ou les butée(s) tout en évitant qu'en fin de phase (A) le doigt ne s'y engage en sens inverse.

La dernière phase du cycle extension/compression permet le retour du doigt 2 au point P0 et donc au support de retrouver sa forme la plus ramassée.

Le support télescopique selon l'invention est particulièrement adapté à l'inclinaison ou la surélévation de pièces d'ameublement, telles que lits ou sommiers. La forme extérieure de l'élément télescopique supérieur mâle 4 pourra dans ce cas être adaptée au style du mobilier à équiper.

Pour d'autres applications le support télescopique selon l'invention peut être exécuté en tous matériaux adaptés aux conditions d'emploi et de poids de l'équipement à supporter.

**Revendications**

1. Support extensible à au moins deux paliers formé de deux éléments (4, 5) télescopiques dont la position relative est commandée par un système de cames (3) solidaire en rotation de l'un (4) des éléments, coopérant avec un doigt (2) solidaire de l'autre élément (5), la came constituant un circuit fermé et définissant des paliers d'appui (P0, P1, P2)

à un niveau bas et au moins un niveau haut, caractérisé par des moyens de maintien au niveau d'au moins un palier haut (P1, P2) défini par le système cames-doigt (3, 2), constitués par au moins une butée formée d'un décrochement (9) à la périphérie haute de l'élément télescopique mâle (4) et d'une partie (8) en saillie sur l'élément télescopique femelle (5).

2. Support selon la revendication 1, caractérisé en ce que le système de cames (3) est aménagé pour permettre le maintien à plusieurs paliers hauts.

3. Support selon l'une quelconque des revendications 1 et 2, caractérisé en ce que la ou chaque butée est constituée d'un décrochement (9) à la périphérie de l'élément mâle (4) dont la hauteur (h2) et la base (15) sont respectivement égales ou supérieures à la hauteur (h1) et aux surfaces à la base de la partie (8) en saillie sur l'élément femelle (5).

4. Support selon la revendication 3, comportant plusieurs paliers hauts et caractérisé en ce que la partie (8) en saillie de l'élément femelle (5) présente des prolongements (7a', 7b') disposés en escalier.

5. Support selon la revendication 3, caractérisé en ce qu'il comporte plusieurs systèmes de butée pour chaque palier haut, répartis sur la périphérie des éléments télescopiques.

6. Support selon la revendication 1, caractérisé en ce que la forme de chaque butée est définie par l'intersection des deux portions de cylindre comprises entre la périphérie et la ou les parois verticales des parties en saillie (8) et en décrochement (9), respectivement de l'élément femelle (5) et de l'élément mâle (4).

7. Support selon la revendication 6, caractérisé en ce que, pour un support à plusieurs niveaux hauts, des butées de longueurs différentes sont séparées l'une de l'autre d'un arc proportionnel à celui parcouru par le doigt (2) coopérant avec le système de cames (3), entre un tronçon vertical (A) du système de cames parcouru par le doigt (2) correspondant au retrait de ou à la venue à l'appui au niveau bas, et les positions de prise d'appui correspondant aux niveaux hauts.

8. Support selon la revendication 7, caractérisé en ce que plusieurs décrochements (9) jointifs sont formés à la périphérie de l'élément mâle (4) et ont une base en forme d'un escalier dont les marches ont une profondeur proportionnelle aux arcs décrits par chaque butée.

9. Support selon l'une quelconque des revendications précédentes, caractérisé en ce qu'un ressort en compression (6) est interposé entre le fond de l'élément femelle (5) et le dessus de l'élément mâle (4), facilitant la rotation de l'élément mâle dans l'élément femelle.

10. Support selon la revendication 9, caractérisé en ce que le ressort (6) est disposé dans un logement cylindrique aménagé dans le haut de l'élément mâle (4) et est maintenu à sa partie supérieure par une tige filetée (1) de fixation de support.

**Patentansprüche**

1. Ausziehbare Stütze mit wenigstens zwei Lagern, die aus zwei teleskopischen Elementen (4, 5), deren Stellung zueinander durch ein bei Drehung mit einem (4) der Elemente einstückig ausgebildeten Nockensystem (3) bestimmt wird, welches mit einem mit dem anderen Element (5) einstückigen Finger (2) zusammenwirkt, wobei der Nocken einen geschlossenen Kreis bildet und Stützlager (PO, P1, P2) auf einem niedrigen Niveau und wenigstens einem hohen Niveau definiert, gekennzeichnet durch Halteeinrichtungen auf dem Niveau wenigstens eines hohen Lagers (P1, P2), das durch das System Nocken-Finger (3, 2) definiert wird, welche durch wenigstens einen Anschlag gebildet werden, der aus einem Absatzbereich (9) am oberen Umfang des teleskopischen männlichen Elements (4) und aus einem Vorsprungbereich (8) an dem teleskopischen weiblichen Element (5) gebildet ist.

2. Stütze nach Anspruch 1, dadurch gekennzeichnet, dass das Nockensystem (3) ausgebildet ist, um das Halten auf verschiedenen hohen Lagern zu erlauben.

3. Stütze nach Anspruch 1 oder 2, dadurch gekennzeichnet, dass der oder jeder Anschlag aus einem Absatzbereich (9) an dem Umfang des männlichen Elements (4) ausgebildet ist, dessen Höhe (h2) und die Basis (15) entsprechend gleich oder grösser sind als die Höhe (h1), und die Flächen an der Basis des Vorsprungbereichs (8) an dem weiblichen Element (5).

4. Stütze nach Anspruch 3, welche mehrere obere Lager aufweist und dadurch gekennzeichnet ist, dass der Vorsprungbereich (8) des weiblichen Elements (5) Verlängerungen (7a', 7b') aufweist, die treppenförmig angeordnet sind.

5. Stütze nach Anspruch 3, dadurch gekennzeichnet, dass sie mehrere Anschlagsysteme für jedes obere Lager aufweist, die am Umfang der teleskopischen Elemente verteilt angeordnet sind.

6. Stütze nach Anspruch 1, dadurch gekennzeichnet, dass die Form eines jeden Anschlags durch die Kreuzungsstelle der beiden Zylinderbereiche definiert ist, die sich zwischen dem Umfang und der oder den vertikalen Seitenwänden der Vorsprungbereiche (8) und des Absatzbereichs (9) des weiblichen Elements (5) bzw. des männlichen Elements (4) befinden.

7. Stütze nach Anspruch 6, dadurch gekennzeichnet, dass für eine Stütze mit mehreren hohen Niveaus Anschläge unterschiedlicher Längen durch einen Bogen voneinander getrennt sind, der proportional zu jenem ist, der durch den mit dem Nockensystem (3) zusammenwirkenden Finger (2) durchlaufen wird, zwischen einem vertikalen Teilstück (A) des von dem Finger (2) durchlaufenen Nockensystems, das dem Zurückziehen von oder dem Anschlagen an den Anschlag niederen Niveau entspricht, und wobei die Anschlagstellungen den hohen Niveaus entsprechen.

8. Stütze nach Anspruch 7, dadurch gekennzeichnet, dass mehrere aneinanderstossende Absatzbereiche (9) am Umfang des männlichen Elements (4) ausgebildet sind und eine Basis in Form einer Treppe aufweisen, deren Stufen eine Tiefe haben, die proportional zu dem von jedem Anschlag beschriebenen Bogen ist.

9. Stütze nach einem der vorhergehenden Ansprüche, dadurch gekennzeichnet, dass eine Druckfeder (6) zwischen dem Boden des weiblichen Elements (5) und der Oberseite des männlichen Elements (4) angeordnet ist, welche die Drehung des männlichen Elements in dem weiblichen Element erleichtert.

10. Stütze nach Anspruch 9, dadurch gekennzeichnet, dass die Feder (6) in einem zylindrischen Raum bzw. Lager angeordnet ist, der in dem oberen Bereich des männlichen Elements (4) ausgebildet ist, und die in ihrem oberen Bereich durch einen Gewindebolzen (1) zur Festlegung der Stütze gehalten ist.

## Claims

1. Extensible support with at least two bearings, formed by two telescopic elements (4, 5) of which the relative position is controlled by a cam system (3) fast in rotation with one (4) of the elements, cooperating with a finger (2) fast with the other element (5), the cam constituting a closed circuit and defining support bearings (PO, P1, P2) at a low level and at least a high level, characterized by holding means provided at the level of at least a high bearing (P1, P2) defined by the cam-finger system (3, 2), said holding means being constituted by at least one abutment formed by a set-back (9) on the high periphery of the male telescopic element (4) and by a part (8) projecting from the female telescopic element (5).

2. Support according to claim 1, characterized in that the cam system (3) is so arranged as to provide a hold at several high levels.

3. Support according to any one of claims 1 and 2, characterized in that the or each abutment is constituted by a set-back (9) on the periphery of the male element (4), the height (h2) and base (15) of which are respectively equal to or greater than the height (h1) and the surface of the base of the part (8) projecting from the female element (5).

4. Support according to claim 3, comprising a plurality of high bearings and characterized in that the part (8) projecting from the female element (5) is provided with extensions (7a', 7b') in staggered arrangement.

5. Support according to claim 3, characterized in that it comprises a plurality of abutments systems for each high bearing, distributed on the periphery of the telescopic elements.

6. Support according to claim 1, characterized in that the shape of each abutment is defined by the intersection of the two cylinder portions comprised between the periphery and the vertical wall or walls of the projecting part (8) and of the set-back (9) of, respectively, the female element (5) and the male element (4).

7. Support according to claim 6, characterized in that, for a support having a plurality of high levels, abutments of different lengths are spaced out one from the other by an arc proportional to that covered by the finger (2) cooperating with the cam system (3), between a vertical section (A) of the cam system followed by the finger (2) in withdrawing from or coming to rest on the low level, and the resting positions corresponding to the high levels.

8. Support according to claim 7, characterized in that a plurality of jointing set-backs (9) are formed on the periphery of the male element (4) and have a stepped base, the steps of which have a depth which is proportional to the arcs described by each abutment.

9. Support according to any one of the preceding claims, characterized in that a compression spring (6) is interposed between the bottom of the female element (5) and the top of the male element (4), to help the rotation of the male element inside the female element.

10. Support according to claim 9, characterized in that the spring (6) is placed inside a cylindrical housing provided in the top part of the male element (4) and is held at its upper part by a support-securing threaded rod (1).

Fig 1a

Fig 1b

Fig 1c

EP 0 165 190 B1

Fig 2

Fig 3a

Fig 3b

Fig 3c

Fig4